(19) Europäisches Patentamt
European Patent Office
Office européen des brevets

(11) **EP 1 806 854 A1**

(12) **EUROPEAN PATENT APPLICATION**

(43) Date of publication:
**11.07.2007 Bulletin 2007/28**

(51) Int Cl.:
***H04B 7/01*** (2006.01)

(21) Application number: **06290055.0**

(22) Date of filing: **04.01.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicant: **Alcatel Lucent**
**75008 Paris (FR)**

(72) Inventors:
• **Banniza, Thomas-Rolf**
**71701 Schwieberdingen (DE)**

• **Wünstel, Klaus, Dr.**
**71701 Schwieberdingen (DE)**
• **Klotsche, Ralf**
**75305 Neuenbürg (DE)**

(74) Representative: **Schmidt, Werner Karl et al**
**Alcatel Lucent**
**Intellectual Property & Standards**
**70430 Stuttgart (DE)**

(54) **Doppler effect compensation for radio transmission**

(57) The goal of the invention is to keep the delay of a communication signal between a moving vehicle (mobile body) and a fixed base station constant. This is achieved by a Doppler compensation method for data to be transmitted within frames via radio transmission between a mobile body and some base station, both mobile body and base station comprise respectively a transceiver connected to an antenna for the radio transmission.

The method comprises the step of determining the Doppler effect acting on the frames when transmitted as a signal through that radio transmission for a given speed and direction of motion of the mobile body with respect to the base station. It is then followed by the step to apply by the transceiver some sampling procedure comprising an allocation of different time delays to the signal, the different time delays being chosen following a law adapted to compensate the determined Doppler effect.

Fig. 3

EP 1 806 854 A1

Printed by Jouve, 75001 PARIS (FR)

**Description**

Technical Field

The present invention relates to a Doppler compensation method for data to be transmitted within frames via radio transmission between a mobile body and a base station, both mobile body and base station comprising respectively a transceiver connected to an antenna for the radio transmission. Furthermore, it is related to a radio frequency device comprising a transceiver connected to an antenna and a sampling unit, the radio frequency device being make for processing signals from that radio transmission. It is also related to a base station as well as a mobile body, both comprising such a radio frequency device for a connection via that radio transmission.

Background of the invention

It is well known that the frequency spectrum of a radio transmission between a moving vehicle (mobile body) and a base station fixed to the ground undergoes some variations coming from the Doppler effect. Such an effect corresponds to a phase noise that the electromagnetic waves from such radio link are subjected to when the direction of motion of the mobile body is parallel to the direction of the propagating electromagnetic wave. This phase noise or signal fading can be usually neglected for actually used radio transmission techniques based on frequency channels well separated (see GSM or even UMTS).

But this situation may no more be the case for techniques based on multicarrier transmission trying to use its full capacity. This is typically the case for e.g. Orthogonal Frequency Division Multiplexing (OFDM), the technique used for radio transmission compatible to the IEEE standard 802.16 also known under the acronym Worldwide Interoperability for Microwave Access WIMAX which seems today one of the most promising technology under discussion for bidirectional communication to mobiles. For such technologies, the sensitivity to the Doppler effect may no more be so negligible since the frequency channels are chosen with a very narrow frequency spacing. For example, at OFDM the frequency spacing is arranged so as to null the correlation between a modulation band signal transmitted by a nth subcarrier of multicarrier transmission and a modulation band signal transmitted by an (n+1)th subcarrier. An apparatus on the transmitting side based upon the OFDM scheme uses a serial/parallel converter for converting serial data (in)to parallel data comprising a plurality of (e.g. N) symbols. And an Inverse Fast Fourier Transform (IFFT) arithmetic unit is used on the frequency data to be converted to a time signal in which subcarrier frequency components have been multiplexed. The real and imaginary parts of that result is used for a quadrature modulation while a transmitter up-converts the modulated signal to a high-frequency signal. On the receiving side, N symbols (OFDM symbols) that have been transmitted through such radio link by N subcarriers are modulated and output by an operation that is the reverse of the operation performed on the transmitting side (i.e. by a time-to-frequency conversion using FFT).

In accordance with OFDM, the frequency assignment with overlapping bands becomes possible, thereby enabling an improvement in the spectrum efficiency. OFDM is different from other multicarrier transmission schemes that modulate theirs carriers independently, and since modulation/demodulation is performed at a stroke by an FFT, an orthogonal relationship is established among the carriers. Further, by adding on a guard interval signal on the transmitting side, it is possible to eliminate inter-symbol interference caused by multipath delay. If an IFFT output signal conforming to one OFDM symbol is adopted as one unit, insertion of the guard interval signifies copying the tail-end portion of the signal to the leading end thereof. Thus, with OFDM, multipath equalization basically is unnecessary. However, in order to avoid causing a decline in performance, a guard interval that is larger than the maximum delay time of multipath envisioned in the system must be set in such a manner that inter-symbol interference will not occur. Though inserting the guard interval makes it possible to eliminate the influence of interference caused by multipath, a tradeoff is involved in that the guard interval diminishes transmission efficiency at the same time. In order to mitigate the decline in transmission efficiency, it is necessary to make the OFDM symbol duration as large as possible, i.e. to make the guard ratio as small as possible. From this viewpoint, the carrier spacing in the given bandwidth should be made small, i.e., the number of carriers should be increased.

However, due to fading, the receive signal varies not only along the time direction but also along the frequency direction, latter one being the Doppler shift. Doppler shift which is directly proportional to the speed of motion of the mobile body is produced in the range of maximum Doppler frequency. If the carrier spacing is small, this variation is greater than one carrier and carrier synchronization on the receiving side is difficult. As a consequence, frequency-selective fading, in which the variation sustained differs depending upon the frequency, occurs and the performance at the receiver is degraded. The reason for this is that inter-carrier interference occurs because frequency fluctuation is independent from carrier to carrier (or more specifically, from carrier group to carrier group within the coherence bandwidth). In order to suppress the degradation of performance caused by that interference, it is necessary to make the carrier spacing as large as possible. Thus, there is a tradeoff with regard to transmission efficiency.

In EP1 460 780 B1 is described an antenna apparatus capable of being installed at a mobile body, the antenna apparatus comprising a plurality of receiving antenna. These antenna are controlled by an antenna switches for switching each of the plurality of receiving antennas between a connected and a disconnected state respectively. An information processing circuit controls that switches based on direction and speed at which the vehicle moves relative to direction of propagation of the received signal. This information is determined from the known position of the broadcast station and the current vehicle position derived from e.g.

GPS. It allows to inhibit Doppler effect when a vehicle receives an OFDM signal, and hence allows good reception even when the vehicle is moving by controlling the switching of antennas based on likely occurrence of Doppler effects rather than signal level, which is not necessarily different between antennas.

For IEEE 802.16 standard which is today one of the favorite technologies under discussion for bidirectional communication to mobiles (mobile body) the following estimations apply: up to 100 km/h negligible influence; up to 200 km/h slight degradation of signal quality, but can still be tolerated; beyond 200 km/h the effect becomes more and more important and decreases signal quality significantly. At 400 km/h which is the target speed for modern long distance trains, a Doppler compensation is absolutely required. Such a picture may be worse i.e. the speed limit beyond which the Doppler effect becomes more and more important may be less when the used technology is based on a smaller frequency channel spacing to increase transmission capacity.

Summary of the invention

In view of the above, it is an object of the present invention to find some alternatives to the use of a plurality of antennas such that a Doppler compensation can be guaranteed in a more flexible way while not at the cost of the transmission capacity.

This object is achieved in accordance with the invention by a Doppler compensation method for data to be transmitted within frames via radio transmission between a mobile body possibly but not exclusively a train and some base station, both mobile body and base station comprise respectively a transceiver connected to an antenna for the radio transmission. The method comprises the step of determining the Doppler effect acting on the frames when transmitted as a signal through that radio transmission for a given speed and direction of motion of the mobile body with respect to the base station. It is then followed by the step to apply by the transceiver some sampling procedure comprising an allocation of different time delays to the signal, the different time delays being chosen following a law adapted to compensate the determined Doppler effect.

In a first implementation of the Doppler compensation method according to the invention, the sampling is performed at reception of a signal from the radio transmission. The then accordingly delayed samples are multiplexed to regenerate the frames transmitted through that radio transmission for a Doppler compensation at reception side.

In a second implementation of the Doppler compensation method according to the invention, the sampling procedure is performed after multiplexing a generated frame before transmitting the corresponding signal via that radio transmission. This implementation corresponds to a Doppler compensation at transmission side.

In one alternative implementation, the sampling procedure is achieved by transmitting the signal through a conducting path with along the path different outputs, the samples being tapped at a respective output according to the time delay to be allocated to. In a second alternative, the sampling procedure is achieved by transmitting the signal through conducting paths being delay lines with different propagation time property. In a third alternative implementation, the sampling procedure is achieved by using a First In First Out [FIFO] buffer such that the signal is buffered in the FIFO at a writing rate $R_w$ different then the reading rate $R_r$ at which the samples are read from the FIFO, the ratio between both rates $R_r$ and $R_w$ following the law adapted to compensate the determined Doppler effect.

In a specific implementation according to the invention, it is advantageous to perform a new determination of the Doppler effect at regular time interval. This is particularly appropriate in the case of a noticeable acceleration or deceleration of the moving body.

The invention further relates to a radio frequency device comprising a transceiver connected to an antenna. The radio frequency device according to the invention comprises further a decision unit analysing the Doppler effect acting on frames when transmitted as a signal through that radio transmission. That decision unit controls a sampling unit from the transceiver such that different time delays is allocated by the sampling unit to the signal, the different time delays being chosen following a law adapted to compensate the determined Doppler effect.

In a first alternative embodiment the Doppler compensation is performed at reception side i.e. on the signal being already faded by the Doppler effect. In that case, the radio frequency device according to the invention is used such that the signal received from the radio transmission is processed by the sampling unit, the signal being delayed accordingly. This is advantageously obtained by transmitting the signal through a time delay unit before being multiplexed to regenerate the frames received from that radio transmission.

In a second alternative embodiment, the Doppler compensation is performed at transmission side as a kind of "precompensation". Then, the radio frequency device is used such that the already generated frames are samples by the sampling unit, the obtained samples being delayed accordingly by being transmitted through a time delay unit to generate the signal to be transmitted via the radio transmission.

In an embodiment according to the invention, the time delay unit comprises a conducting path with along the path different outputs at which are taped the samples. The corresponding different time delays are obtained by taping the signal at different outputs of the conducting path. In an alternative embodiment, the time delay unit comprises conducting paths differing in their propagation time property. In an other alternative embodiment, the delay unit is made of a First In First Out (FIFO) buffer such that it is written in the FIFO at a writing rate $R_w$ different then the reading rate $R_r$ at which it is read from the FIFO, the ratio between both rates $R_r$ and $R_w$ being defined accordingly to compensate the determined Doppler effect.

Advantageously, all the embodiments according to the invention are defined such that there are particularly adapted for a base station and or a mobile body, the base station being in connection via radio transmission with a mobile body moving at some given speed and direction with respect to the base station. In particularly, such base station and/or mobile body comprise a radio frequency device according to the invention applying the Doppler compensation method at reception and/or transmission side.

Advantageous developments of the invention are described in the dependent claims, the following description and the drawings.

### Description of the drawings

An exemplary embodiment of the invention will now be explained further with the reference to the attached drawings in which:

Fig. 1 is a schematic view of the principle according to the present invention;
Fig. 2 is a schematic view of an embodiment according to the present invention;
Fig. 3 is a schematic view of an alternative embodiment according to the present invention.

### Detailed description of preferred embodiments

The goal of the invention is to keep the delay of a signal between a communication device on a moving vehicle (mobile body) and a fixed ground station (base station, BS) constant. As modern data transmission systems usually do not transmit their information continuously, but in a framed structure, it is not needed to keep the delay constant continuously (which is physically not possible). In fact, it is sufficient to perform a Doppler compensation only for the time when a frame element has to be received or transmitted as a signal via the radio transmission.

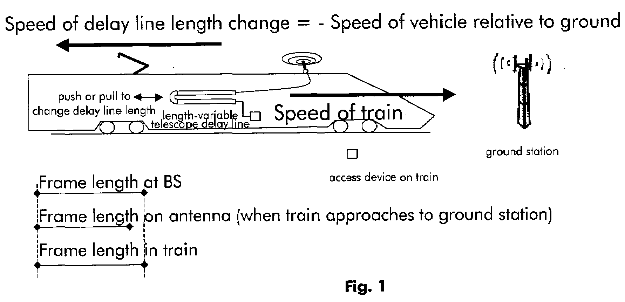

In Fig. 1 is described the principle of the idea according to the present invention. A 'telescope' delay line is inserted between the antenna mounted on the moving vehicle (here a train) and the access device on this vehicle. In such a way, a variable time delay can be added to the received signal depending on the actual length of the telescope. If the vehicle moves towards the ground station (BS) during a transmission of a frame element from the vehicle to the BS, then the telescope is adjusted to a minimum length. And during the reception of the frame element, the length of the telescope is continuously enlarged to add additional time delay accordingly to the amount of time delay the signal between the ground station and the vehicle is reduced due to the motion of the vehicle. In such a way, it would be possible to keep the overall delay to a constant, therefore compensating any Doppler effect fading the transmitted signal.

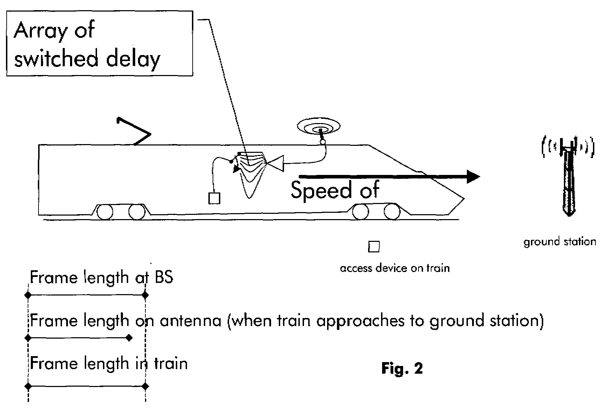

In Fig. 2 is shown a realistic embodiment according to the invention. The mechanic model described above which is an academic model can be realized in a way that there is no longer a mechanically (telescope) varying delay line. This can be done according to the invention in the following way. The signal received by the antenna is fed in parallel in an array of time delay lines with respectively increasing length and thus increasing delay. It is also conceivable that the delay lines are of similar length but with different propagation time property e.g. using different material combination. In any case, the output ports of all delay lines are connected to a corresponding number of inputs of a multiplexing and sampling device. The delay line output is selected whose delay added to the signal delay between the moving vehicle and the ground station will serve for an overall constant delay. This is obtained by controlling the array of different time delay possibly using some decision unit switching the array of time delay lines accordingly to the analyzed Doppler effect. If the delay is constant, no Doppler effect appears.

In an alternative embodiment according to the invention, a time delay unit made out of a single conducting path is used instead of the array of switched time delay lines. The different time delays to be allocated to the signal when transmitted through the conducting path are then obtained by taping the samples at different outputs of that conducting path.

Furthermore, it is important that the signals from the delay line unit outputs (array or single path) are sampled in a way that exactly only one sample per delay line output is used to form the output of the multiplexer, otherwise the signal would not be free of Doppler effect. In general, the embodiment according to the invention can be designed as a separate radio frequency RF device simply to be applied at the RF input of a standard subscriber device instead of the standard antenna. But for practical reasons (e.g. for the synchronization of the multiplexer with the framed structure of the radio access system), it can be of advantage to integrate it into the RF front-end of the access device.

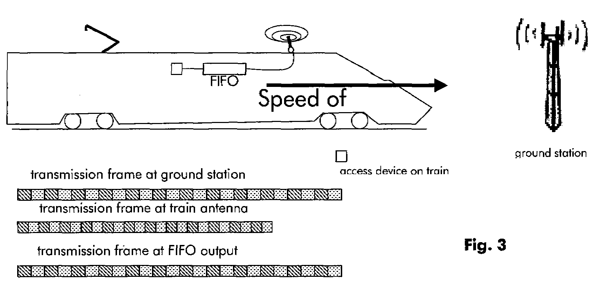

In Fig. 3 is shown another alternative embodiment according to the invention for achieving the constant delay during the transmission of a frame element. The mobile body, here again a train e.g. a fast speed train is in motion at a definite speed towards the ground station BS. The radio frequency device according to the invention comprises now a delay unit made of a First In First Out FIFO buffer. A sampling device takes samples with a sampling rate $R_w$ from the output signal of the antenna of the mobile body and stores them in a FIFO register. After the frame element for this vehicle is stored completely in the FIFO buffer, the FIFO is read out with a slightly different sampling rate $R_r$. If $R_w > R_r$, the contents of the FIFO is stretched in time (the end of the frame element experiences more added delay than the begin of the frame element). Conversely, if $R_r > R_w$, the frame element is compressed in time (the end of the frame element experiences less added delay than the begin of the frame element). By choosing the ratio $R_w/R_r$ in an appropriate way, the overall delay between the ground station (BS) and the access device (radio frequency device) on the vehicle can be kept constant during reception of the frame element.

In any of the embodiments according to the invention, the different samples of a received packet are processed in such a way by stretching or compressing the samples into the frame, the stretching or compression factor being defined according to the determined speed and direction of motion of the mobile body with respect to the BS. Those stretching or compression factor corresponds to the different time delays allocated to the signal following a law adapted to compensate the analysed Doppler effect. To perform the method according to the invention, samples are taken from the received signal and delayed individually according to a certain law before being transferred to further usage of the signal. It is possible that the samples could be taken with constant time distance values, but also with increasing or decreasing time distance values.

The law adapted to compensate the Doppler effect fading the signal transmitted through such a radio transmission can be defined as follow. For a sampling frequency fs and a time delay increase di (defined as the time delay difference - delta time delay - e.g. between two adjacent delay line outputs) to compensate the Doppler effect caused by the speed of the mobile body relative to the BS vr (c being the radio propagation speed in free air, i.e. around 300000km/s):

$$di = vr \ / \ ( \ fs \ ^* \ c) \ and \ fs = vr \ / \ ( \ c \ ^* \ di \ ).$$

Depending on the maximum frequency fmax of the transmitted signal, the sampling frequency fs must be defined greater than a minimum value fsmin, which is given by the Nyquist criterion: fsmin > = 2 * fmax.

The Doppler effect is present as soon as either transmitter or receiver moves such that the distance between the two varies. Furthermore, the relevance of the Doppler effect for e.g. OFDM transmission depends on the number of carriers and the sub-channel widths, which both define the sensitivity to Doppler effect. For Wimax technology following the IEEE standard 802.16 which is today one of the favorite technologies under discussion for bidirectional communication with a mobile body, we saw above that at least beyond 200 km/h the effect becomes more and more important and decreases signal quality significantly. Therefore, it is possible to define a minimum speed vrmin of the mobile body, below which the Doppler effect can be neglected such that the compensation mechanism according to the invention needs not to be applied. Using that parameter in the above formula gives for the delta delay value di:

$$di = vrmin \ / \ ( \ fsmin \ ^* \ c \ );$$

And the sampling frequency needed to compensate the Doppler shift for the relative speed vr can be calculated as

$$fs = fsmin \ ^* \ (vr \ / \ vrmin \ ).$$

It should be noted that the sampling frequency has to be varied to tune the Doppler compensation mechanism to the required Doppler shift.

Here are some figures for an example taking as limiting case the condition that the sampling frequency fs is at least twice the maximum frequency of the sampled signal (generation of the frames). Then, the number n of time delay line outputs or cells of the FIFO buffer can be calculated as follows: n = (length of frame element)/(distance of samples). If the signal is of 10 MHz bandwidth around a carrier wave with 1 GHz, the maximum frequency is then 1.005 GHz, thus the sampling frequency is (minimum) 2.01 GHz. For a frame element length of 5 ms, n will be defined by:

$$n = 5 \text{ ms} / 0.49 \text{ ns} = 10050000.$$

These are still demanding requirements, but feasible. For better practical realization, the signal can be mixed down after the antenna into an appropriate intermediate frequency range, e.g. around an IF carrier of 20 MHz. Then the maximum frequency of the above example will be 25 MHz with the sampling frequency (minimum) at 50 MHz. In that case, n is defined by:

$$n = 5 \text{ ms} / 20 \text{ ns} = 250000$$

which may be easier to achieve.

It can be of advantage to perform the sampling at the input of an analog-to-digital converter while it is to that resulting conversion which is allocated different time delays to compensate the determined Doppler effect. Furthermore, the Doppler compensation method according to the invention can be applied at the reception of a signal from the radio transmission before multiplexing the then delayed samples. It can also be applied at the transmission side as a kind of "precompensation" method i.e. the sampling procedure is performed after multiplexing a generated frame before transmission of the signal via the radio transmission. In a similar way, a radio frequency device according to the invention can be implemented either in a base station or in the mobile device, both taking part to the radio transmission. It is also conceivable that both the base station as well as the mobile device are equipped with such a radio frequency device and/or applying the Doppler compensation method according to the invention.

**Claims**

1. A Doppler compensation method for data to be transmitted within frames via radio transmission between a mobile body and a base station, both mobile body and base station comprise respectively a transceiver connected to an antenna for the radio transmission, the method comprises the following steps of:

   • Determining the Doppler effect acting on the frames when transmitted as a signal through that radio transmission for a given speed and direction of motion of the mobile body with respect to the base station;
   The method being further **characterized by** the step of
   • Applying by the transceiver some sampling procedure by allocating different time delays to the signal, the different time delays being chosen following a law adapted to compensate the determined Doppler effect.

2. The method according to claim 1 whereby the sampling procedure is performed at reception of a signal from the radio transmission before multiplexing the then delayed samples to regenerate the frames received from that radio transmission for a Doppler compensation at reception side.

3. The method according to claim 1 whereby the sampling procedure is performed after multiplexing a generated frame before transmission of the signal via the radio transmission for a Doppler compensation at transmission side.

4. The method according to claim 1 whereby the sampling procedure is achieved by transmitting the signal through a conducting path with along the path different outputs, the samples being tapped at a respective output according to the time delay to be allocated to.

5. The method according to claim 1 whereby the sampling procedure is achieved by transmitting the signal through conducting paths being delay lines with different propagation time property.

6. The method according to claim 1 whereby the sampling procedure is achieved by using a First In First Out [FIFO] buffer such that the signal buffered in the FIFO at a writing rate $R_w$ different then the reading rate $R_r$ at which the samples are read from the FIFO, the ratio between both rates $R_r$ and $R_w$ following the law adapted to compensate the determined Doppler effect.

7. The method according to claim 1 whereby a new determination of the Doppler effect is performed at regular time interval.

8. A radio frequency device comprising a transceiver connected to an antenna, the radio frequency device being **characterized** that it comprises further a decision unit analyzing the Doppler effect acting on frames when transmitted as a signal through a radio transmission between a mobile body and a base station, the mobile body moving at a given speed and direction with respect to the base station while the decision unit controls a sampling unit from the transceiver such that different time delays is allocated by the sampling unit to the signal, the different time delays being chosen following a law adapted to compensate the determined Doppler effect.

9. The radio frequency device according to claim 8 whereby it is used for a Doppler compensation at reception side by applying the sampling unit on the signal received from the radio transmission, the signal being delayed accordingly by being transmitted through a time delay unit before being multiplexed to regenerate the frames received from that radio transmission.

10. The radio frequency device according to claim 8 whereby it is used for a Doppler compensation at transmission side by applying the sampling unit on already generated frames, the obtained samples being delayed accordingly by being transmitted through a time delay unit to generate the signal to be transmitted via the radio transmission.

11. The radio frequency device according to claim 9 or 10 whereby the time delay unit comprises a conducting path with along the path different outputs at which are taped the samples, the different paths corresponds to the different time delay to be allocate to the signal.

12. The radio frequency device according to claim 9 or 10 whereby the time delay unit comprises conducting paths being delay lines with different propagation time property.

13. The radio frequency device according to claim 9 or 10 whereby the delay unit is made of a First In First Out [FIFO] buffer such that it is written in the FIFO at a writing rate $R_w$ different then the reading rate $R_r$ at which it is read from the FIFO, the ratio between both rates $R_r$ and $R_w$ being defined accordingly to compensate the determined Doppler effect.

14. A base station to be in connection via radio transmission with a mobile body moving at some given speed and direction with respect to the base station while the base station comprises a radio frequency device according to claim 8.

15. A mobile body to be in connection with a base station via radio transmission and moving at some given speed and direction with respect to the base station while the mobile body comprises a radio frequency device according to claim 8.

Speed of delay line length change = - Speed of vehicle relative to ground

push or pull to ⟷ change delay line length

length-variable telescope delay line

Speed of train

ground station

access device on train

Frame length at BS

Frame length on antenna (when train approaches to ground station)

Frame length in train

**Fig. 1**

8

Array of
switched delay

Speed of

ground station

access device on train

Frame length at BS

Frame length on antenna (when train approaches to ground station)

Frame length in train

Fig. 2

EP 1 806 854 A1

Fig. 3

**European Patent Office**

**EUROPEAN SEARCH REPORT**

Application Number

EP 06 29 0055

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | EP 1 460 780 A (SHARP KABUSHIKI KAISHA) 22 September 2004 (2004-09-22) * column 5, line 43 - column 6, line 21 * * column 16, line 4 - line 35 * * claim 1 * | 1-15 | INV. H04B7/01 |
| Y | US 2004/248519 A1 (NIEMELA KARI) 9 December 2004 (2004-12-09) * page 1, paragraph 10 * * page 4, paragraph 66 * * page 5, paragraph 86 - paragraph 87 * | 1,8,14 | |
| Y | US 6 131 067 A (GIRERD ET AL) 10 October 2000 (2000-10-10) * column 12, line 26 - line 32 * * column 14, line 44 - line 65 * * figure 4 * | 1,8,14 | |
| | | | TECHNICAL FIELDS SEARCHED (IPC) H04B |

The present search report has been drawn up for all claims

| Place of search | Date of completion of the search | Examiner |
|---|---|---|
| Munich | 17 May 2006 | Fribert, J |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 06 29 0055

This annex lists the patent family members relating to the patent documents cited in the above-mentioned European search report.
The members are as contained in the European Patent Office EDP file on
The European Patent Office is in no way liable for these particulars which are merely given for the purpose of information.

17-05-2006

| Patent document cited in search report | | Publication date | Patent family member(s) | | Publication date |
|---|---|---|---|---|---|
| EP 1460780 | A | 22-09-2004 | CN | 1531221 A | 22-09-2004 |
| | | | DE | 602004000153 D1 | 01-12-2005 |
| | | | JP | 2004282476 A | 07-10-2004 |
| | | | US | 2004198229 A1 | 07-10-2004 |
| US 2004248519 | A1 | 09-12-2004 | NONE | | |
| US 6131067 | A | 10-10-2000 | AU | 1131097 A | 30-04-1997 |
| | | | WO | 9714054 A1 | 17-04-1997 |
| | | | US | 6661372 B1 | 09-12-2003 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1460780 B1